# DEMANDE DE BREVET EUROPEEN

(11) **EP 0 821 171 A1**
(43) Date de publication de la demande: **28.01.1998**
(21) Numéro de dépôt: 97401766.7
(22) Date de dépôt: 22.07.1997
(51) Int. Cl.: F16D 1/112

(54) **Attache rapide à baionnette pour le raccordement de deux organes de direction, notamment d'un véhicule automobile**

(30) Priorité: 25.07.1996 FR 9609395
(71) Demandeur: ECIA - EQUIPEMENTS ET COMPOSANTS POUR L'INDUSTRIE AUTOMOBILE, F-25400 Audincourt (FR)
(72) Inventeur: Mouhot, Frédérique, 25420 Voujeaucourt (FR); Duchene, Jean-Marc, 25200 Grand-Charmont (FR)
(74) Mandataire: Habasque, Etienne Joel Jean-François

(57) **Abrégé**

Cette attache rapide à baïonnette pour le raccordement de deux organes de direction, notamment d'un véhicule automobile, dont l'un comporte une douille (2) munie d'au moins une fente (7) de réception d'une partie en saillie latérale (5,6) d'une queue (3) de l'autre organe, l'attache comportant des moyens (4) de guidage et de verrouillage- en position de la partie en saillie latérale de la queue dans la fente de la douille, et des moyens de sollicitation élastique (9) de ces moyens de guidage et de verrouillage (4), est caractérisée en ce que la ou chaque fente (7) de la douille (2) se présente sous la forme d'une fente axiale munie d'un décrochement latéral (7a), adapté pour recevoir au moins en partie la partie en saillie latérale (5,6) de la queue (3), en position de verrouillage.

## Description

La présente invention concerne une attache rapide à baïonnette pour le raccordement de deux organes de direction, notamment d'un véhicule automobile.

Plus particulièrement, l'invention concerne une attache rapide pour le raccordement de deux organes, dont l'un comporte une douille munie d'au moins une fente de réception d'une partie en saillie latérale d'une queue de l'autre organe, l'attache comportant des moyens de guidage et de verrouillage en position de la partie en saillie latérale de la queue dans la fente de la douille et des moyens de sollicitation élastique de ces moyens de guidage et de verrouillage.

On connaît déjà dans l'état de la technique, notamment du document FR-A-2 628 488 au nom de la Demanderesse, une attache rapide de ce type dans laquelle la douille comporte au moins une fente hélicoïdale et porte un organe de guidage et de verrouillage repoussant élastiquement la partie en saillie latérale de la queue dans le fond de la fente hélicoïdale, de manière à la verrouiller dans cette position.

Par ailleurs, des cannelures sont prévues entre la douille et l'organe de guidage et de verrouillage pour permettre un déplacement axial de cet organe par rapport à cette douille, tout en empêchant cet organe de se déplacer angulairement autour de la douille, afin d'assurer un verrouillage correct en position de la queue dans cette douille.

Le but de l'invention est de proposer différents perfectionnements à cette attache.

A cet effet, l'invention a pour objet une attache rapide à baïonnette pour le raccordement de deux organes de direction, notamment d'un véhicule automobile, dont l'un comporte une douille munie d'au moins une fente de réception d'une partie en saillie latérale d'une queue de l'autre organe, l'attache comportant des moyens de guidage et de verrouillage en position de la partie en saillie latérale de la queue dans la fente de la douille, et des moyens de sollicitation élastique de ces moyens de guidage et de verrouillage, caractérisée en ce que la ou chaque fente de la douille se présente sous la forme d'une fente axiale munie d'un décrochement latéral adapté pour recevoir au moins en partie la partie en saillie latérale de la queue, en position de verrouillage, pour raccorder les deux organes.

Avantageusement, la ou chaque partie en saillie latérale est venue de matière avec une bague de fixation, emmanchée sur et reliée à la queue par l'intermédiaire de moyens de fixation angulaire et axiale.

L'invention sera mieux comprise à la lecture de la description qui va suivre, donnée uniquement à titre d'exemple et faite en se référant aux dessins annexés, sur lesquels :
- la Fig.1 représente une vue en perspective éclatée d'une attache rapide à baïonnette selon l'invention;
- la Fig.2 représente une vue en perspective à échelle agrandie d'une queue entrant dans la constitution d'une telle attache rapide; et
- la Fig.3 représente une vue en perspective à échelle agrandie d'une douille entrant dans la constitution d'une telle attache rapide.

On reconnaît en effet sur ces figures, une attache rapide de type à baïonnette désignée par la référence générale 1 et présentant une structure générale se rapprochant de celle décrite dans le document antérieur mentionné précédemment.

En effet, cette attache rapide permet le raccordement de deux organes de direction, notamment d'un véhicule automobile, dont l'un comporte une douille 2 munie d'au moins une fente de réception d'une partie en saillie latérale correspondante d'une queue 3 de l'autre organe de direction.

Par ailleurs, cette attache rapide comporte également des moyens 4 de guidage et de verrouillage en position de la partie en saillie latérale de la queue 3 dans la fente correspondante de la douille 2, pour le raccordement de la queue et de la douille et donc des deux organes de direction du véhicule.

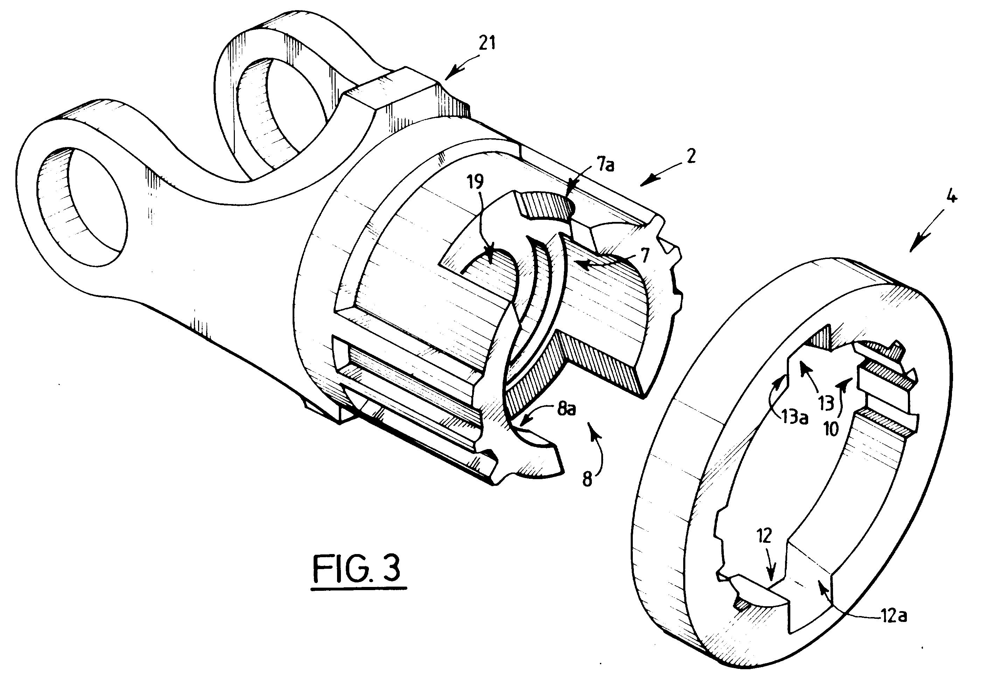

Dans l'exemple de réalisation représenté sur ces figures, la queue 3 comporte deux parties en saillie latérale diamétralement opposées, 5 et 6, qui sont adaptées pour s'engager dans deux fentes correspondantes 7 et 8 de la douille 2 (Fig.3).

Comme on peut le voir en particulier sur la figure 3, la ou chaque fente de la douille 2, c'est-à-dire les fentes 7 et 8, se présente sous la forme d'une fente axiale munie d'un décrochement latéral adapté pour recevoir au moins en partie la partie en saillie latérale correspondante de la queue, en position de verrouillage, pour raccorder les deux organes.

C'est ainsi par exemple que sur ces figures, ces décrochements sont désignés par les références 7a pour la fente 7, et 8a pour la fente 8, de la douille 2.

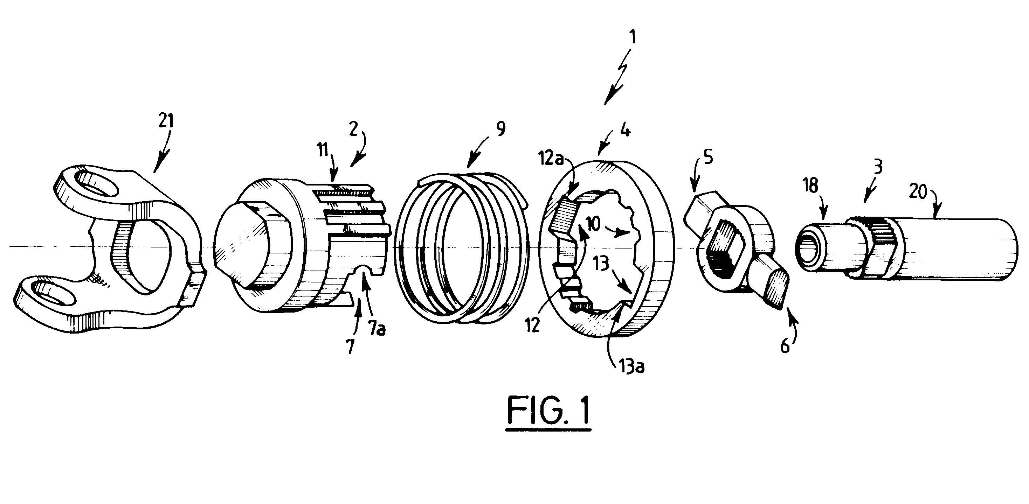

Les moyens de guidage et de verrouillage désignés par la référence générale 4 sur les figures 1 et 3, se présentent quant à eux sous la forme d'une bague de guidage et de verrouillage disposée autour de la douille 2 et déplaçable axialement sur celle-ci.

Cette bague de verrouillage est sollicitée par des moyens élastiques constitués par exemple par un ressort hélicoïdal, désigné par la référence générale 9 sur la figure 1.

Par ailleurs, le bord interne de cette bague de guidage et de verrouillage 4 comporte des cannelures, par exemple 10, adaptées pour coopérer avec des cannelures complémentaires, par exemple 11, ménagées sur la douille 2, pour permettre le guidage en déplacement axial de cette bague de guidage et de verrouillage sur cette douille.

Comme cela sera décrit plus en détail par la suite, le bord interne de la bague de guidage et de verrouillage 4 comporte également une encoche en regard de la ou de chaque fente de la douille pour le passage de la partie en saillie latérale correspondante de la queue.

Ces encoches sont désignées par les références générales 12 et 13 sur cette figure 1, et sont munies de bords inclinés 12a et 13a de guidage et de butée adaptés pour coopérer avec les parties en saillie latérale correspondantes 5 ou 6, de la queue, afin de les guider et de les verrouiller en position dans les fentes correspondantes de la douille.

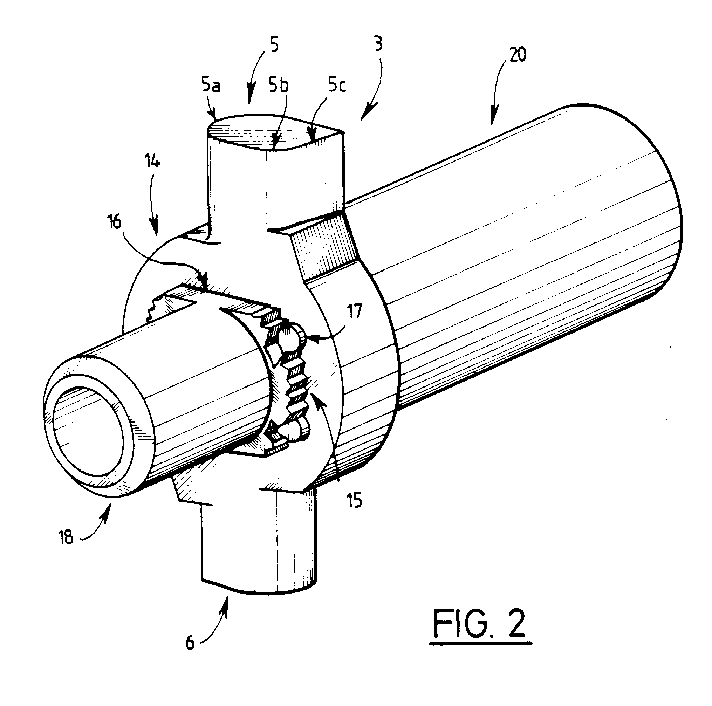

En fait, et comme on peut le voir plus clairement sur la figure 2, les parties en saillie latérale 5 et 6 peuvent être venues de matière avec une bague de fixation, désignée par la référence générale 14 sur cette figure 2, cette bague de fixation étant emmanchée sur et reliée à la queue 3 par l'intermédiaire des moyens de fixation angulaire et axiale.

C'est ainsi par exemple que les moyens de fixation angulaire de cette bague de fixation 14 sur la queue 3, comprennent des cannelures et des méplats complémentaires de ces pièces.

Les cannelures complémentaires sont désignées par la référence générale 15 sur cette figure, tandis que les méplats complémentaires sont désignés par la référence générale 16 par exemple.

Par ailleurs, les moyens de fixation axiale de cette bague de fixation 14 sur cette queue 3 peuvent comporter des sertissages, régulièrement répartis autour de ces deux pièces et dont l'un est désigné par exemple par la référence générale 17 sur cette figure 2.

Par ailleurs, la ou chaque partie en saillie latérale, par exemple 5, peut comporter un premier bord arrondi, désigné par la référence générale 5a sur cette figure et sur un second bord, en regard du premier, deux portions en rampe successives 5b et 5c, adaptées pour coopérer avec le bord incliné de guidage et de butée de l'encoche correspondante de la bague de guidage et de verrouillage, pour pousser chaque partie en saillie latérale 5,6 dans le décrochement latéral 7a,8a de la fente 7,8 correspondante de la douille 2, en position de verrouillage.

Enfin, on notera que la queue 3 de l'organe correspondant peut également comporter une portion d'extrémité 18 de centrage et de guidage adaptée pour s'engager dans un évidement correspondant 19 de la douille 2 (Fig.3), lors de l'engagement de ces pièces l'une dans l'autre.

L'un de ces organes, c'est-à-dire par exemple celui muni de la queue 3 est désigné par la référence générale 20 sur la figure 2, et peut être une portion d'arbre de direction d'un véhicule automobile ou autre.

L'autre organe désigné par la référence générale 21 (Figs.1 et 3) peut quant à lui se présenter par exemple sous la forme d'une fourche de cardan ou autre, adaptée pour être reliée au reste du mécanisme de direction du véhicule.

Le ressort 9 permet de solliciter la bague de guidage et de verrouillage 4 dans une position dans laquelle celle-ci est légèrement en retrait par rapport à l'extrémité de la douille 2.

L'opérateur de montage peut alors engager l'extrémité de la queue 3 dans la douille 2 et plus particulièrement la portion de centrage et de guidage 18 de celle-ci, dans l'évidement correspondant 19 de la douille.

La mise en regard des parties en saillie latérale 5,6 de la queue 3 et des fentes correspondantes 7,8 de la douille 2 peut être perçue sous la forme d'un effet de cran par l'opérateur, du fait du décalage entre la bague de guidage et de verrouillage 4 et l'extrémité de la douille 2.

Une fois que les parties en saillie latérale 5,6 sont en regard des fentes 7,8 de la douille, l'opérateur appuie sur l'organe correspondant pour permettre aux parties en saillie latérale de la queue de s'engager dans les fentes de la douille, en repoussant la bague de guidage et de verrouillage 4 à l'encontre de l'action des moyens élastiques 9.

Une fois que les parties en saillie latérale et plus particulièrement les bords arrondis 5a de celles-ci, arrivent en regard des décrochements latéraux 7a et 8a des fentes correspondantes de la douille, la bague de guidage et de verrouillage 4 et plus particulièrement les bords inclinés 12a, 13a correspondants des encoches 12,13 de celle-ci, en coopération avec les portions en rampe 5b et 5c des parties en saillie latérale, provoquent un déplacement angulaire relatif des deux pièces, pour amener les parties en saillie latérale et plus particulièrement les bords arrondis de celles-ci, à s'engager dans les décrochements latéraux 7a, 8a des fentes de verrouillage 7,8 de la douille 2.

La bague de guidage et de verrouillage 4 peut alors se déplacer sous l'action des moyens élastiques 9, derrière ces parties en saillie 5,6 pour assurer le verrouillage en position de ces pièces l'une par rapport à l'autre.

Le démontage de ces pièces se fait par l'opérateur en déplaçant axialement la bague de guidage et de verrouillage 4, à l'encontre de la sollicitation du ressort 9, ce qui permet de libérer les parties en saillie latérale 5,6 et donc la queue de la douille.

Il va de soi bien entendu que différents modes de réalisation de cette attache peuvent être envisagés.

C'est ainsi par exemple qu'un soufflet de protection, par exemple en matière plastique ou autre, peut être disposé autour de la douille 2 et du ressort 9, afin d'éviter l'encrassement de ceux-ci.

Par ailleurs, les parties en saillie de la queue peuvent présenter des formes différentes de celles décrites.

Il va de soi également que des moyens d'accouplement de sécurité, par exemple angulaire, peuvent être prévus entre ces pièces et en particulier entre la partie de centrage et de guidage 18 de la queue et l'évidement correspondant 19 de la douille 2.

Différents moyens de détrompage peuvent également être prévus pour faciliter le montage de la bague de guidage et de verrouillage sur la douille et en particulier des nombres différents de cannelures de forme complémentaire de chaque côté de celles-ci.

Enfin, des moyens de rattrapage des jeux radiaux d'assemblage entre la douille et la queue peuvent être prévus.

Ces moyens de rattrapage peuvent comporter par exemple des surfaces complémentaires tronconiques de la partie de centrage et de guidage 18 de la queue 3 et de l'évidement correspondant 19 de la douille 2.

## Revendications

1. Attache rapide à baïonnette pour le raccordement de deux organes de direction, notamment d'un véhicule automobile, dont l'un comporte une douille (2) munie d'au moins une fente (7,8) de réception d'une partie en saillie latérale (5,6) d'une queue (3) de l'autre organe, l'attache comportant des moyens (4) de guidage et de verrouillage en position de la partie en saillie latérale de la queue dans la fente de la douille, et des moyens de sollicitation élastique (9) de ces moyens de guidage et de verrouillage (4), caractérisée en ce que la ou chaque fente (7,8) de la douille (2) se présente sous la forme d'une fente axiale munie d'un décrochement latéral (7a, 8a), adapté pour recevoir au moins en partie la partie en saillie latérale (5,6) de la queue (3), en position de verrouillage, pour raccorder les deux organes.

2. Attache selon la revendication 1, caractérisée en ce que les moyens de guidage et de verrouillage se présentent sous la forme d'une bague de guidage et de verrouillage (4) disposée autour de la douille et déplaçable axialement sur celle-ci.

3. Attache selon la revendication 2, caractérisée en ce que la bague de guidage et de verrouillage (4) et la douille (2) comportent des cannelures axiales complémentaires (10,11), de guidage des déplacements axiaux de la bague sur la douille.

4. Attache selon la revendication 2 ou 3, caractérisée en ce que la bague de guidage et de verrouillage (4) comporte sur son bord interne, en regard de la ou chaque fente (7,8) de la douille (2), une encoche (12,13) munie de bords inclinés (12a,13a) de guidage et de butée adaptés pour coopérer avec la ou chaque partie en saillie latérale correspondante (5,6) de la queue (3).

5. Attache selon l'une quelconque des revendications précédentes, caractérisée en ce que les moyens élastiques comprennent un ressort hélicoïdal (9) disposé autour de la douille (2).

6. Attache selon l'une quelconque des revendications précédentes, caractérisée en ce que la ou chaque partie en saillie latérale (5,6) est venue de matière avec une bague de fixation (14), emmanchée sur et reliée à la queue (3) par l'intermédiaire de moyens de fixation angulaire et axiale.

7. Attache selon la revendication 6, caractérisée en ce que les moyens de fixation angulaire de la bague de fixation (14) sur la queue (3) comprennent des cannelures et des méplats complémentaires (15,16) de ces pièces.

8. Attache selon la revendication 6 ou 7, caractérisée en ce que les moyens de fixation axiale de la bague de verrouillage (14) sur la queue (3) comprennent des sertissages (17) de ces pièces.

9. Attache selon l'une quelconque des revendications précédentes, caractérisée en ce que la ou chaque partie en saillie latérale (5,6) comporte un premier bord arrondi (5a) adapté pour s'engager dans le décrochement latéral correspondant (7a,8a) de la fente (7,8) de la douille (2) et sur un second bord en regard du premier, deux portions (5b,5c) en rampe, adaptées pour coopérer avec les bords inclinés (12a,13a) de guidage et de butée des encoches de la bague de guidage et de verrouillage (4).

10. Attache selon l'une quelconque des revendications précédentes, caractérisée en ce que la douille comporte un évidement central (19) de réception et de guidage d'une portion complémentaire (18) de la queue, lors de son engagement dans celle-ci.

11. Attache selon l'une quelconque des revendications précédentes, caractérisée en ce que la queue (3) et la douille (2) comprennent des moyens complémentaires de rattrapage des jeux radiaux d'assemblage.
